# EUROPEAN PATENT SPECIFICATION

(11) **EP 4 034 426 B1**
(45) Date of publication and mention of the grant of the patent: **01.11.2023**
(21) Application number: 20793799.6
(22) Date of filing: 23.09.2020
(51) Int. Cl.: B60R 3/02, B60R 19/48

(54) **IMPROVED TILTABLE FOOTBOARD SYSTEM FOR HEAVY VEHICLE**
VERBESSERTES KIPPBARES TRITTBRETTSYSTEM FÜR SCHWERE FAHRZEUGE
SYSTÈME DE MARCHEPIED INCLINABLE AMÉLIORÉ POUR VÉHICULE LOURD

(30) Priority: 23.09.2019 IT 201900017003
(43) Date of publication of application: 03.08.2022
(73) Proprietor: IVECO S.P.A., 10156 Torino (IT)
(72) Inventor: PACCONI, Angelo, 10040 La Loggia (TO) (IT)
(74) Representative: Studio Torta S.p.A.
(86) International application number: PCT/IB2020/058884
(87) International publication number: WO 2021/059156

(56) References cited:
- CN-A- 1 663 847
- CN-Y- 201 405 813
- DE-A1-102016 011 627
- JP-A- 2007 176 186
- US-A- 4 159 122
- US-A1- 2008 231 076
- US-A1- 2013 154 229

## Description

### TECHNICAL FIELD

The invention relates to a footboard system for a heavy vehicle, in particular to a front tiltable footboard system for a heavy vehicle.

### KNOWN STATE OF THE ART

Tiltable footboards are known, which are integrated in the front part of a heavy vehicle, for example a truck or a bus, and are configured to assume a first closed position, in which they are integrated in the profile of the front bumper of the vehicle, and a second open position, in which they define a step relative to the profile of the front bumper of the vehicle.

Said step is normally used by the driver of the vehicle in order to access the upper front part of the vehicle, for example the windshield thereof. In particular, the tiltable footboard is hinged to the front bumper, so that it can move from the aforesaid first position to the aforesaid second position.

Examples of tiltable footboards of this type are disclosed in patent applications IT 1107039 or EP 0885776.

However, these footboards are hard to be moved, since they usually are large-sized and are at least partially made of a metal or high-density material.

Hence, operators must make a significant physical effort in order to open and close the footboard. Furthermore, if the footboard slips from the hands of the operator, the latter would risk being hit by the footboard itself.

Other known footboards are known by documents CN1663847 A, which shows the preamble of claim 1, US2013154229 A1, US2008231076 A1, CN201405813 Y, US4159122 A or DE102016011627 A1.

Therefore, known tiltable footboards need to be improved so as to increase the comfort perceived during their use as well as their safety.

The object of the invention is to fulfil the needs discussed above in an economic and optimized fashion.

### SUMMARY OF THE INVENTION

The aforesaid object is reached by means of a tiltable footboard system and a vehicle according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1A is a perspective view showing a front portion, in particular a front bumper, of a heavy vehicle comprising a footboard system according to the invention in a first operating step,
- figure 1B is a perspective view showing the footboard system of figure 1A in a second operating step;
- figure 2 is a perspective view showing a portion of the footboard system according to the invention; and

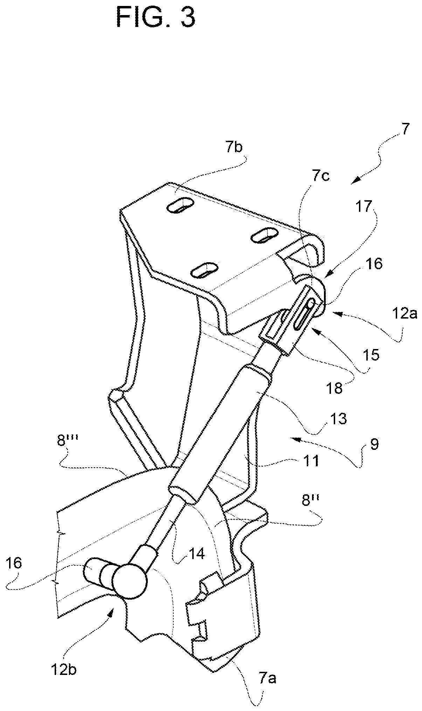

- figure 3 is an enlarged perspective view of a portion of figure 2.

### DETAILED DESCRIPTION OF THE INVENTION

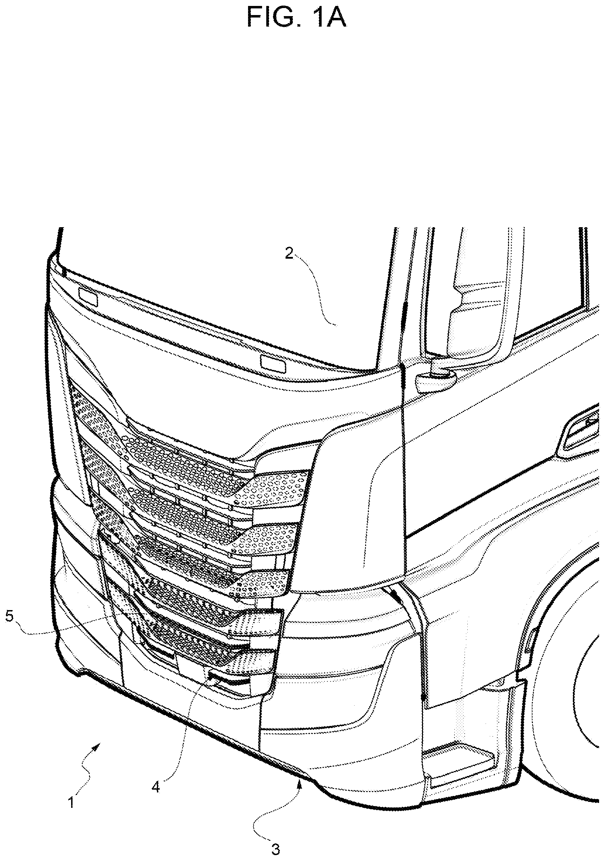

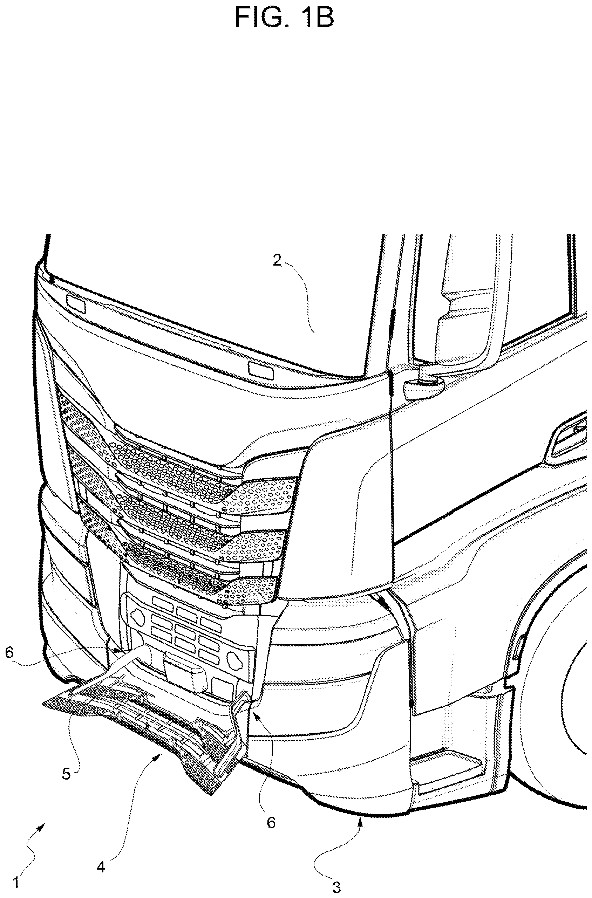

Figures 1A and 1B show a front portion of a heavy vehicle 1, for example a truck, comprising, as it is known, a cabin 2 and provided with a front bumper 3.

The front bumper 3 comprises a tiltable footboard system 4, which is configured to assume a first closed position, in which it is integrated in the front bumper 3, namely the profile of the footboard system 4 is continuous with the profile of the remaining portions of the bumper 3, and a second open position, in which it defines a step designed to support the weight of a driver of the vehicle.

Therefore, in particular, the tiltable footboard system 4 comprises a wall 5 having an outer profile that, when it is in the closed position, is continuous with the profile of the front bumper 3. The wall 5 is preferably made of aluminium. In particular, in the case descrybed herein, the wall 5 is the central part of the bumper of the cabin 2.

The tiltable footboard system 4 further comprises mechanical connection means 6 between the wall 5 and a portion that is fixed to a frame of the vehicle 1, for example the bumper 3. Said connection means 6 allow the wall 5 to shift between the aforesaid closed and open positions.

In the embodiment described herein, the tiltable footboard system 4 comprises first connection means 6 and second connection means 6 arranged on the sides, on the left and on the right, of the wall 5. Hereinafter only one of them will be described for the sake of brevity, since they are identical.

According to the invention, the connection means 6 comprise a support bracket 7, which is rigidly carried by the frame of the vehicle, for example by the front bumper 3, a connection arm 8, which comprises a first end 8a rigidly connected to the wall 5 and a second end 8b cooperating with the support bracket 7, and elastic means 9, which are interposed between the support bracket 7 and the connection arm 8 and are configured to transmit a return force to the connection arm and, hence, to the wall 5 so as to cause said wall 5 to return towards the bumper 2. Therefore, said force tends to keep the wall 5 closed in the bumper 2 in its closed configuration and to damp the opening thereof, as described more in detail below.

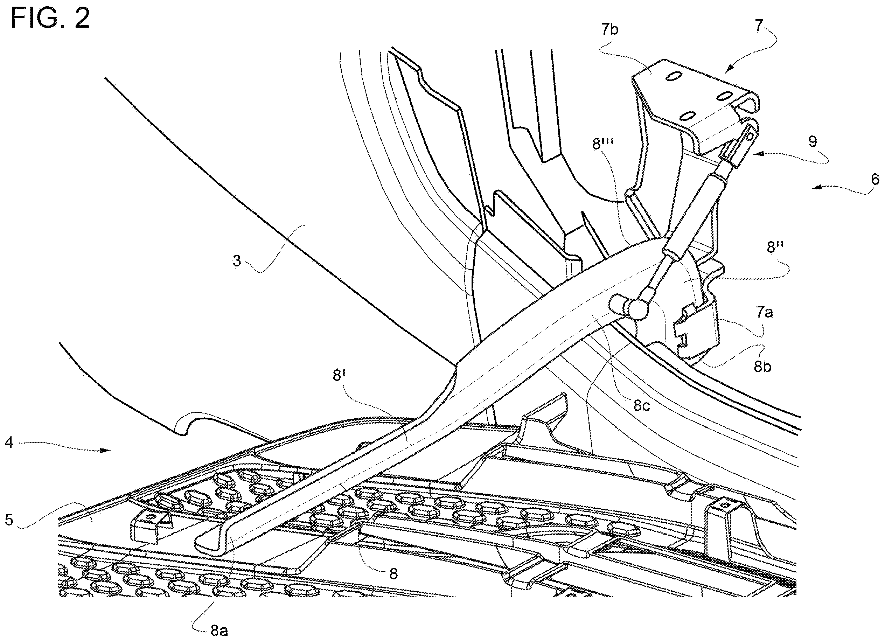

With reference to figure 2, the connection arm 8 advantageously has a gooseneck development and comprises a first substantially rectilinear portion 8', which defines, at its end, the first end 8a fixed to the wall 5, for example by means of threaded elements (which are not shown), and a second substantially rectilinear portion 8'', which has a longitudinal axis perpendicular and skewed relative to the longitudinal axis of the first portion 8' and defines the second end 8b cooperating with the support bracket 7.

The connection arm 8 further comprises a third portion 8" ', which is configured to connect said first and second portions 8', 8'' to one another. In particular, the third portion 8‴ has a curved shape, in the case described herein the shape of a quarter of a circle, configured to define the 90° angle between the first and the second portions 8', 8". The first portion 8' substantially has a greater longitudinal development than the second portion 8".

The support bracket 7 comprises a lower portion 7a and an upper portion 7b, which are vertically spaced apart from one another. In particular, the lower portion 7a has a "C"-shaped cross section and is configured to wrap the second portion 8'' of the connection arm 8 on at least two sides, for example a rear side and a lateral side. At least the rear side is advantageously configured to cooperate in contact with the second portion 8", as better explained below.

In particular, the shape and the distance of the lower portion 7a relative to the second portion 8" are such that, in the open position, it cooperates in contact with the latter in order to prevent the wall 5 from being moved any further relative to the bumper 3 and, when the wall 5 needs to be moved to the closed position, it does not forbid the movement of the third portion 8‴ and of the first portion 8' relative to it.

The elastic means 9, as mentioned above, are interposed between the support bracket 7 and the connection element 8 and are configured to generate a relative force between the two of them, which allows the wall 5 to be opened in a damped manner and be held in the closed position. As a consequence, in order to optimize the arms of action of the force, the elastic means 9 are interposed between the upper portion 7b of the support bracket 7 and the first portion 8', in particular at an end 8c of the first portion 8' opposite the first end 8a, namely close to the connection of the first portion to the third portion 8‴.

The elastic means 9 advantageously comprise an air spring 11, which is connected to the support 7 and to the arm 8 by means of a first and a second movable connections 12a, 12b. As it is known, the air spring 11 comprises a cylinder 13 and a rod 14. In the case described herein, the cylinder 13 is connected to the upper portion 7b of the support bracket 7 by means of the first movable connection 12a and the rod 14 is connected to the end 8c of the arm 8 by means of the second movable connection 12b.

At least one of the movable connections 12a, 12b advantageously comprises a tolerance recovery device 15, which is configured to allow for the fitting of the air spring 11 in case there are differences from the design values during the mounting phase. In the case described herein, the second movable connection 12b comprises a known hinge 16, whereas the first movable connection 12a comprises a known hinge 16 and a tolerance recovery device 15 as described above.

In particular, the tolerance recovery device 15 comprises a slot 17, which is configured to house, on the inside, the pin of the hinge 16. In this way, if there are tolerance problems, the slot 16 allows the pin to be housed inside its entire extension, thus allowing possible tolerance differences due to the assembly to be compensated.

In the case described herein, the tolerance recovery device 15 comprises a pair of slots 17 obtained in a pair of walls 18 extending from the cylinder 13, in the direction of its longitudinal axis, towards the upper portion 7b of the support bracket 7 on both sides of a coupling portion 7c, which defines a hole (not shown) designed to house the pin of the hinge 16 so that it is free to rotate.

The slots 17 preferably extend in length in the direction of the longitudinal axis of the spring 11 and, therefore, the pin of the hinge 16 can cooperate with the walls 18 in any point along said longitudinal extension of the slots 17, thus compensating, as mentioned above, possible tolerance differences due to the assembly of the footboard system 4.

The embodiment of the footboard system 4 described above works as follows.

In the condition of figure 1A, the wall 5 is enclosed in the bumper 3, in continuity with the shape defined by the latter. In this condition, the air spring 11 reaches its minimum extension, namely the rod 14 is in the maximum retracted position inside the cylinder 13 and provides a return force suited to hold the arm 8 in the closed position. In particular, said return force is of approximately 110 N. Given the point of connection in the end portion 8c and the fact that the wall 5, when it is closed, is in a substantially vertical position, the force provided by the air spring 11 is sufficient to keep the wall 5 firmly closed in the bumper 3, unless there is an external intervention.

In the condition of figure 1B, the wall 5 is open, the air spring 11 reaches it maximum extension, namely the rod 14 is in the maximum position outside the cylinder 13 and, given the point of connection in the end portion 8c, the weight of the wall 5 does not allow it to return, unless there is an external intervention. Therefore, the step defined by the footboard is stable in its position.

When operators want to shift from the closed position to the open position, they simply need to apply a force along an upper edge of the wall 5 towards the outside relative to the bumper 3. Given the extent of the closing force of the spring 11 and the fact that, by opening, the weight force of the wall 5 helps operators, the latter never excessively interferes with the opening of the wall 5, but simply damps the movement thereof. In this way, the opening is safe, namely sudden opening movements of the wall 5 are avoided.

On the contrary, when operators want to shift from the open position to the closed position, they simply need to apply a force along an upper edge of the wall 5 towards the bumper 3. During this operation, on the one hand, there is a return force that causes the rod 14 to return inside the cylinder 13 and, on the other hand, the weight force tends to decrease its arm of action and, therefore, decreases its tilting effect. In this way, the opening is facilitated by the return of the air spring 11.

Owing to the above, the advantages of a footboard system 4 according to the invention are evident.

The footboard system 4 shown herein allows the wall 5 integrated in the bumper 2 to be opened in a damped and safe manner and, at the same time, allows the wall 5 to be kept in the bumper 2 when it is in the closed position.

The use of a pair of gooseneck arms 8, namely comprising the portions 8', 8" and 8‴ described above, with the support 7 allows users to obtain, without further hinges, the controlled rotation of the wall 5 relative to the bumper 2.

The particular geometry described herein has the advantage of being particularly compact and, hence, of reducing the axial dimensions of the bumper 2.

The use of a gas spring 11 as elastic means 9 ensures that a proper force is provided in a compact and economic fashion.

The tolerance recovery device 15 allows for the compensation, during building or maintenance, of possible tolerances in the mounting of the gas spring 11.

In particular, the position of the fixing of the hinges 16, together with the geometry of the arms 8, allows the arms of the force provided by the elastic means 9 to be exploited, thus having to apply a low-value force in order to keep the wall 5 adherent to the bumper 2 and damp the downward movement thereof.

Finally, the footboard system 4 according to the invention can be subjected to changes and variants, which, though, do not go beyond the scope of protection set forth in the appended claims.

For instance, it is clear that the shape of wall 5, of the support 7 or of the arms 8 can be different. Moreover, the number of arms 8 can be changed.

Furthermore, the elastic means 9 or the tolerance recovery device 15 can be replaced by devices having the same functionality.

## Claims

1. A footboard system (4) for a bumper (2) of a heavy vehicle, said footboard system (4) comprising a wall (5) and at least one mechanical connection means (6) between said wall (5) and a support (7), which is fixed relative to said bumper, said mechanical connection means (6) being configured to move said wall (5) from a first condition, in which it defines a step, to a second position, in which it is integrated in said bumper (2), said footboard system (4) comprising elastic means (9), which are interposed between said support (7) and said wall (5) and are configured to provide a return force to cause said wall (5) to return towards said bumper (2),
wherein said at least one mechanical connection means (6) comprises a connection arm (8) comprising a first end (8a) connected to said wall (5) and a second end (8b) cooperating in contact with said support (7),
**characterized in that** said support comprises an upper portion (7b) and a lower portion (7a) spaced from each other, said lower portion (7a) cooperating in contact with said second end (8b), said lower portion (7b) wraps, at least at the back and on the side, said second end (8b), said second end (8b) cooperating in contact with at least said rear wrapping of said lower portion (7b).

2. The system according to claim 1, wherein said connection arm (8) comprises a first rectilinear portion defining said first end (8a) and a second rectilinear portion (8') defining said second end (8b), said first portion having a greater longitudinal development than said second rectilinear portion (8").

3. The system according to claim 2, wherein said connection arm (8) comprises a third portion (8‴) joining said first and second rectilinear portions (8', 8"), said third portion (8‴) and said first rectilinear portion (8') not cooperating in contact with said support (7) in any operating condition of said wall (5).

4. The system according to claim 2 or 3, wherein the longitudinal axes of said first and said second rectilinear portions (8', 8") are perpendicular to each other and skewed.

5. The system according to one of the preceding claims, wherein said elastic means (9) comprise a gas spring (11).

6. The system according to claim 5, wherein one out of a rod (14) and a cylinder (13) of said gas spring (11) is connected to said mechanical connection means (6) by means of a first movable connection (12b) and the other of said rod (14) and said cylinder (13) is connected to said support (7) by means of a second movable connection (12a).

7. The system according to claim 6, wherein said movable connections (12a 12b) comprise a hinge (16).

8. The system according to claim 6 or 7, wherein at least one of said movable connections (12a, 12b) comprises a tolerance recovery device (15).

9. The system according to claim 8, wherein said tolerance recovery device (15) comprises a slot (17) defined in a wall (18) integral to one out of said cylinder (13) and said rod (14) and defining a seat for said movable connections (12a, 12b).

10. The system according to one of the claims from 7 to 9, when depending on one of the claims 3 to 5, wherein said movable connection (12b) between said gas spring (11) and said connection arm (8) is provided on said first portion (8') .

11. The system according to one of the claims from 7 to 10, when depending on one of the claims 4 or 5, wherein said movable connection (12b) between said gas spring (11) and said connection arm (8) is provided on said first portion (8') in the vicinity of said third portion (8‴).

12. A vehicle comprising a bumper (2) and a tiltable footboard system (4) according to one of the preceding claims.

## Patentansprüche

1. Trittbrettsystem (4) für eine Stoßstange (2) eines Schwerlastfahrzeugs, welches Trittbrettsystem (4) eine Wand (5) und zumindest ein mechanisches Verbindungsmittel (6) zwischen der Wand (5) und einem Träger (7) umfasst, welcher in Bezug auf die Stoßstange fest angeordnet ist, welche mechanischen Verbindungsmittel (6) dazu ausgebildet sind, die Wand (5) aus einem ersten Zustand, in welchem sie eine Stufe begrenzt, in eine zweite Position zu bewegen, in welcher sie in die Stoßstange (2) integriert ist, und welches Trittbrettsystem (4) elastische Mittel (9) umfasst, die zwischen dem Träger (7) und der Wand (5) einliegen und dazu ausgebildet sind, eine Rückstellkraft auszuüben, um die Wand (5) zur Stoßstange (2) rückkehren zu lassen,
wobei das zumindest eine mechanische Verbindungsmittel (6) einen Verbindungsarm (8) umfasst, der ein erste Ende (8a), welches mit der Wand (5) verbunden ist, und ein zweites Ende (8b) umfasst, das in Kontakt mit dem Träger (7) zusammenwirkt,
**dadurch gekennzeichnet, dass** der Träger einen oberen Teil (5b) und einen unteren Teil (7a) umfasst, die voneinander beabstandet sind, welcher untere Teil (7a) in Kontakt mit dem zweiten Ende (8b) zusammenwirkt und welcher untere Teil (7b) zumindest an der Rückseite und seitlich das zweite Ende (5b) umhüllt, wobei das zweite Ende (8b) in Kontakt mit zumindest der hinteren Umhüllung des unteren Teils (7b) zusammenwirkt.

2. System gemäß Anspruch 1, bei welchem der Verbindungsarm (8) einen ersten geraden Teil umfasst, der das erste Ende (8a) definiert, und einen zweiten geraden Teil (8`), der das zweite Ende (8b) definiert, wobei der erste Teil eine größere Längserstreckung aufweist als der zweite gerade Teil (8").

3. System gemäß Anspruch 2, bei welchem der Verbindungsarm (8) einen dritten Teil (8‴) umfasst, der die ersten und zweiten geraden Teile (8', 8") verbindet, welcher dritte Teil (8‴) und welcher erste gerade Teil (8') nicht in Kontakt mit dem Träger (7) in irgendeiner Betriebsstellung der Wand (5) zusammenwirken.

4. System gemäß Anspruch 2 oder 3, bei welchem die Längsachsen der ersten und zweiten geraden Teile (8', 8") senkrecht zueinanderstehen und abgeschrägt sind.

5. System gemäß einem der vorhergehenden Ansprüche, bei welchem das elastische Mittel (9) eine Gasdruckfeder (11) umfasst.

6. System gemäß Anspruch (5), bei welchem eines von dem Stab (14) und dem Zylinder (13) der Gasdruckfeder (11) mit dem mechanischen Verbindungsmittel (6) durch eine erste bewegliche Verbindung (12b) verbunden ist und das andere von dem Stab (14) und dem Zylinder (13) mit dem Träger (7) durch eine zweite bewegliche Verbindung (12a) verbunden ist.

7. System gemäß Anspruch 6, bei welchem die beweglichen Verbindungen (12a, 12b) ein Scharnier (16) umfassen.

8. System gemäß Anspruch 6 oder 7, bei welchem zumindest eine der beweglichen Verbindungen (12a, 12b) eine Toleranz-Rückgewinnungseinrichtung (15) umfasst.

9. System gemäß Anspruch 8, bei welchem die Toleranz-Rückgewinnungseinrichtung (15) einen Schlitz (17) umfasst, der in einer Wand (18) ausgebildet ist, die einteilig mit dem Zylinder (13) oder dem Stab (14) ausgebildet ist und welcher einen Sitz für die beweglichen Verbinder (12a, 12b) bildet.

10. System gemäß einem der Ansprüche 7 bis 9, in Abhängigkeit von einem der Ansprüche 3 bis 5, bei welchem der bewegliche Verbinder (12b) zwischen der Gasdruckfeder (11) und dem Verbindungsarm (8) an dem ersten Teil (8') vorgesehen ist.

11. System gemäß einem der Ansprüche 7 bis 10 in Abhängigkeit von einem der Ansprüche 4 oder 5, bei welchem der bewegliche Verbinder (12b) zwischen der Gasdruckfeder (11) und dem Verbindungsarm (8) auf dem ersten Teil (8') in der Nähe des dritten Teils (8‴) vorgesehen ist.

12. Fahrzeug, umfassend eine Stoßstange und ein klappbares Trittbrettsystem (4) gemäß einem der vorhergehenden Ansprüche.

## Revendications

1. Système de marchepied (4) pour un pare-chocs (2) d'un véhicule lourd, ledit système de marchepied (4) comprenant une paroi (5) et au moins un moyen de raccordement mécanique (6) entre ladite paroi (5) et un support (7) qui est fixe par rapport audit pare-chocs, ledit moyen de raccordement mécanique (6) étant configuré pour faire passer ladite paroi (5) d'une première condition, dans laquelle elle définit une marche à une seconde position dans laquelle elle est intégrée dans ledit pare-chocs (2), ledit système de marchepied (4) comprenant des moyens élastiques (9) qui sont intercalés entre ledit support (7) et ladite paroi (5) et sont configurés pour fournir une force de retour afin de provoquer le retour de ladite paroi (5) vers ledit pare-chocs (2),
dans lequel ledit au moins un moyen de raccordement mécanique (6) comprend un bras de raccordement (8) comprenant une première extrémité (8a) raccordée à ladite paroi (5) et une seconde extrémité (8b) coopérant en contact avec ledit support (7),
**caractérisé en ce que** ledit support comprend une partie supérieure (7b) et une partie inférieure (7a) espacées l'une de l'autre, ladite partie inférieure (7a) coopérant en contact avec ladite seconde extrémité (8b), ladite partie inférieure (7b) enveloppe, au moins à l'arrière et sur le côté, ladite seconde extrémité (8b), ladite seconde extrémité (8b) coopérant en contact avec au moins ledit enveloppement arrière de ladite partie inférieure (7b).

2. Système selon la revendication 1, dans lequel ledit bras de raccordement (8) comprend une première partie rectiligne définissant ladite première extrémité (8a) et une deuxième partie rectiligne (8') définissant ladite seconde extrémité (8b), ladite première partie ayant un plus grand développement longitudinal que ladite deuxième partie rectiligne (8").

3. Système selon la revendication 2, dans lequel ledit bras de raccordement (8) comprend une troisième partie (8‴) assemblant lesdites première et deuxième parties rectilignes (8', 8"), ladite troisième partie (8‴) et la première partie rectiligne (8') ne coopérant pas en contact avec ledit support (7) dans l'une quelconque des conditions opérationnelles de ladite paroi (5).

4. Système selon la revendication 2 ou 3, dans lequel les axes longitudinaux de ladite première et de ladite deuxième partie rectiligne (8', 8") sont perpendiculaires entre eux et biaisés.

5. Système selon l'une des revendications précédentes, dans lequel lesdits moyens élastiques (9) comprennent un ressort à gaz (11).

6. Système selon la revendication 5, dans lequel l'un parmi une tige (14) et un cylindre (13) dudit ressort à gaz (11) est raccordé audit moyen de raccordement mécanique (6) au moyen d'un premier raccordement mobile (12b) et l'autre parmi ladite tige (14) et ledit cylindre (13) est raccordé audit support (7) au moyen d'un second raccordement mobile (12a).

7. Système selon la revendication 6, dans lequel lesdits raccordements mobiles (12a, 12b) comprennent une charnière (16).

8. Système selon la revendication 6 ou 7, dans lequel au moins l'un desdits raccordements mobiles (12a, 12b) comprend un dispositif de récupération de tolérance (15) .

9. Système selon la revendication 8, dans lequel ledit dispositif de récupération de tolérance (15) comprend une fente (17) définie dans une paroi (18) solidaire par rapport à l'un parmi ledit cylindre (13) et ladite tige (14) et définissant un siège pour lesdits raccordements mobiles (12a, 12b).

10. Système selon l'une des revendications 7 à 9, lorsqu'elle dépend de l'une des revendications 3 à 5, dans lequel ledit raccordement mobile (12b) entre ledit ressort à gaz (11) et ledit bras de raccordement (8) est prévu sur ladite première partie (8').

11. Système selon l'une des revendications 7 à 10, lorsqu'elle dépend de l'une des revendications 4 ou 5, dans lequel ledit raccordement mobile (12b) entre ledit ressort à gaz (11) et ledit bras de raccordement (8) est prévu sur ladite première partie (8') à proximité de ladite troisième partie (8‴).

12. Véhicule comprenant un pare-chocs (2) et un système de marchepied inclinable (4) selon l'une des revendications précédentes.
